# EUROPEAN PATENT APPLICATION

(11) **EP 4 552 859 A1**
(43) Date of publication of application: **14.05.2025**
(21) Application number: 23209260.1
(22) Date of filing: 10.11.2023
(51) Int. Cl.: B60B 3/02, B60B 21/10, B60B 27/00, B65D 90/18, B65B 65/02, B65D 88/00

(54) **WHEEL ASSEMBLY**

(71) Applicant: AUTOSTORE TECHNOLOGY AS, 5578 Nedre Vats (NO)
(72) Inventor: Pløen, Christian Håkon, 5578 Nedre Vats (NO); Nurzynski, Daniel, 5578 Nedre Vats (NO); Jung, Jakob, 5578 Nedre Vats (NO)
(74) Representative: Jarrett, Daniel Phillip

(57) **Abstract**

A wheel assembly (8) for a container handling vehicle (201,301,40) comprises a unitary wheel hub (9), wherein a circumferential surface of the wheel hub includes a wheel rim portion (10) and a pulley portion.

## Description

### FIELD OF THE INVENTION

The present invention relates to a wheel assembly for a container handling vehicle.

### BACKGROUND AND PRIOR ART

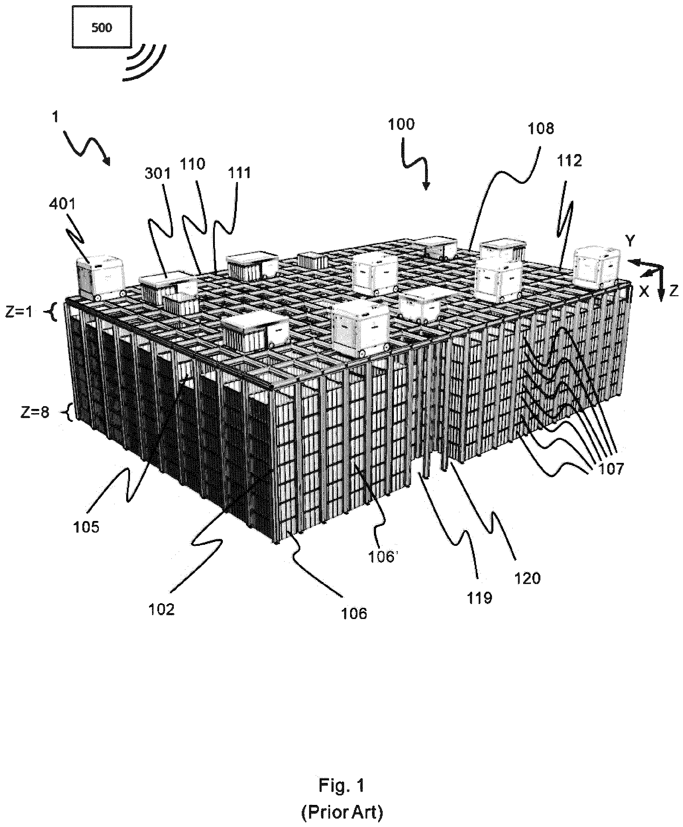

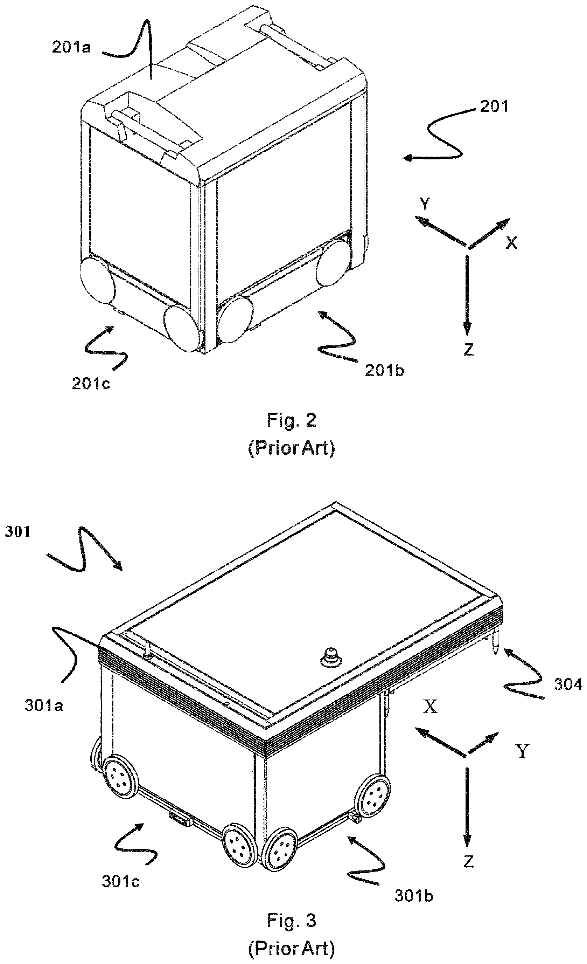

Fig. 1 discloses a prior art automated storage and retrieval system 1 (i.e. a storage system), with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminium profiles.

The framework structure 100 of the automated storage and retrieval system 1 comprises a rail system 108 (i.e. a rail grid) arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction X across the top of the frame structure 100, and a second set of parallel rails 111 arranged perpendicular to the first set of rails 110 to guide movement of the container handling vehicles 201,301,401 in a second direction *Y* which is perpendicular to the first direction X. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201,301,401 comprises a vehicle body 201a,301a,401a and a wheel arrangement featuring first and second sets of wheels 201b,201c,301b,301c,401b,401c which enable the lateral movement of the container handling vehicles 201,301,401 in the *X* direction and in the Y direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b,301b,201c,301c,401b,401c can be lifted and lowered, so that the first set of wheels 201b,301b,401b and/or the second set of wheels 201c,301c,401c can be engaged with the respective set of rails 110, 111 at any one time.

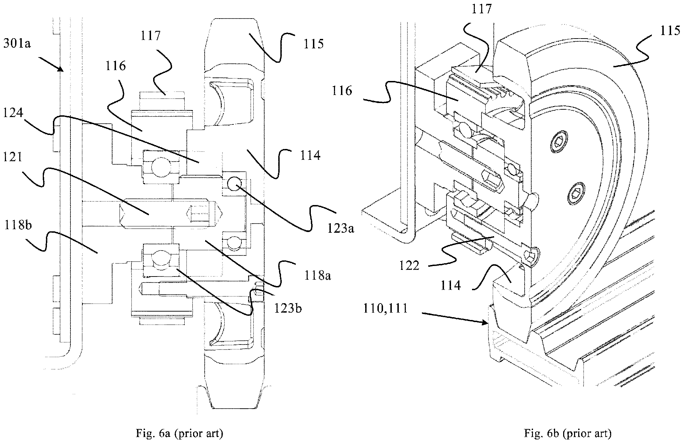

A wheel assembly used in the prior art container handling vehicle shown in fig. 3 is shown in figs. 6a/6b. The wheel assembly comprises a wheel rim 114, a tyre 115 moulded onto the wheel rim 114, an axle assembly 118a,118b and a pulley 116 for a drive belt 117.

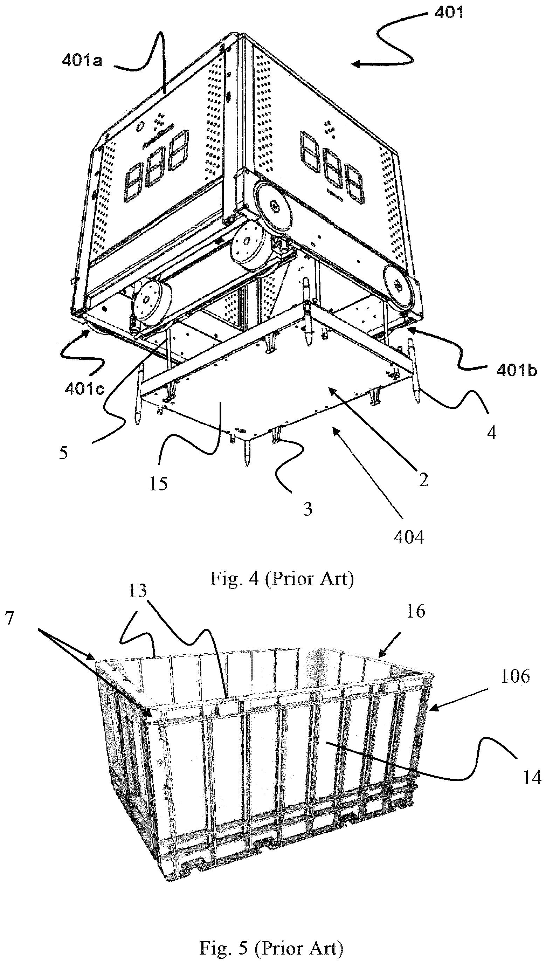

Each prior art container handling vehicle 201,301,401 also comprises a lift device 404, see fig. 4, for vertical transportation of storage containers 106 (i.e. a container lift device), e.g. raising a storage container 106 from, and lowering a storage container 106 into, a storage column 105. The lift device 404 features a lifting frame 2 comprising container connectors 3, adapted to engage connecting recesses 13 at an upper rim of the sidewalls 14 of a storage container 106, see fig. 5, and guiding pins 4. The guiding pins 4 are arranged to interact with guiding pin recesses 7 at the corners of the storage container and ensure a correct alignment of the lifting frame 2 and container connectors 3 relative to the storage container. The guiding pins 4 will also assist in guiding the lifting frame 2 relative to the upright members of the storage column 105. The lifting frame 2 can be lowered from the vehicle 201,301,401 so that the position of the lifting frame 2 with respect to the vehicle 201,301,401 can be adjusted in a third direction Z which is orthogonal the first direction X and the second direction Y. The lifting device of the container handling vehicle 201 is located within the vehicle body 201a in Fig. 2.

To raise or lower the lifting frame 2 (and optionally a connected storage container 106), the lifting frame 2 is suspended from a band drive assembly by lifting bands 5. In the band drive assembly, the lifting bands are commonly spooled on/off at least one rotating lifting shaft or reel arranged in the container handling vehicle. Various designs of band drive assemblies are described in for instance WO 2015/193278 A1, WO 2017/129384 A1 and WO 2019/206438 A1.

Conventionally, and also for the purpose of this application, *Z*=1 identifies the uppermost layer for storing storage containers below the rail system 108, i.e. the layer immediately below the rail system 108, *Z*=2 the second layer below the rail system 108, *Z*=3 the third layer etc. In the exemplary prior art disclosed in Fig. 1, Z=8 identifies the lowermost, bottom layer of storage containers. Similarly, *X*=1...n and *Y*=1...n identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X*=17, *Y*=1, *Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X*- and *Y*-direction, while each storage cell may be identified by a container number in the *X-, Y-* and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a as shown in Figs. 2 and 4 and as described in e.g. WO2015/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicles 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks.

WO2018/146304A1, the contents of which are incorporated herein by reference, illustrates a typical configuration of rail system 108 comprising rails and parallel tracks in both *X* and *Y* directions forming a rail grid.

In the framework structure 100, most of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a `port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1 but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference. The conveyor system in WO2014/075937A1 is a storage container lift arranged to transport a storage container between two vertically separated framework structures 100. A potential disadvantage of the storage container lift is that it is a potential single point of failure and repair of a defective storage container lift may be time-consuming.

When a storage container 106 stored in one of the storage columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device 404, and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105 or relocated to other storage columns 105.

For monitoring and controlling the storage system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the storage 1 comprises a control system 500 which typically is computerized and which typically comprises a database for keeping track of the storage containers 106.

### SUMMARY OF THE INVENTION

The present invention is defined by the attached claims and in the following:
In a first aspect, the present invention provides a wheel assembly for a container handling vehicle, the wheel assembly comprising
- a wheel hub, wherein a circumferential surface of the wheel hub provides a wheel rim portion and a pulley portion, wherein the pulley portion comprises teeth for engaging a drive belt;
- a tyre being moulded onto the wheel rim portion;
- an axle around which the wheel hub is rotatably mounted; and
- a first ring bearing and a second ring bearing arranged between the wheel hub and the axle.

The teeth of the pulley portion may also be termed ribs, the teeth/ribs may be evenly distributed at the circumferential surface making up the pulley portion. Each tooth/rib extend in a direction being parallel to the rotational axis of the wheel hub.

In an embodiment of the wheel assembly, the wheel hub may be a single component, i.e. a single unitary component. The single unitary component constituting the wheel hub may be termed a rotor-component.

The circumferential surface of the wheel hub may extend in an axial direction, i.e. in the direction of the centreline of the axle, beyond the axial extent of each of the ring bearings.

In an embodiment of the wheel assembly, the axle may be a single component, i.e. a single unitary component. The single unitary component constituting the axle may be termed a rotor-component.

In an embodiment of the wheel assembly, the first ring bearing may be arranged radially inwards of the wheel rim portion; and the second ring bearing may be arranged radially inwards of the pulley portion. Each of the first ring bearing and the second ring bearing comprises an inner and an outer ring.

In an embodiment of the wheel assembly, the wheel rim portion may comprise at least one tooth over which the tyre is moulded, the tooth extending parallel to a rotational axis of the tyre. The rotational axis of the tyre is colinear with the rotational axis of the wheel hub. The tooth of the wheel rim portion may also be termed a rib. The wheel rim portion may comprise a plurality of teeth/ribs, and the teeth/ribs may be evenly distributed at the circumferential surface making up the wheel rim portion. Each tooth/rib may preferably extend in a direction being parallel to the rotational axis of the wheel hub.

In an embodiment of the wheel assembly, a tooth of the wheel rim portion may be an extension of one of the teeth of the pulley portion. In other words, the wheel hub may comprise teeth extending over the pulley portion and at least parts of the wheel rim portion.

In an embodiment of the wheel assembly, the wheel rim portion may comprise a radially extending recess over which the tyre is moulded. The recess may be arranged along the whole circumference of the wheel rim, or along one or more sections of the circumference of the wheel rim. The recess may be continuous or discontinuous. The recess may create a discontinuity in a tooth that would otherwise extend across the wheel rim portion of the wheel hub. The recess may create a discontinuity in a tooth that would otherwise extend across both the pulley portion and the wheel rim portion. The recess helps to prevent lateral movement of the tyre relative to the wheel rim portion.

The recess may comprise a radially inwardly projecting discontinuity in an outer surface of the wheel rim portion, when viewed along its width in the lateral/axial direction.

The tyre may comprise at least one projection, on its inner circumference, that inserts into or otherwise occupies the recess, when the tyre is moulded onto the wheel rim portion.

In an embodiment of the wheel assembly, the axle may comprise a first end and a second end, the first end being configured to connect the axle to a container handling vehicle. The first end of the axle may comprise a bolt hole, e.g. a threaded bolt hole, and the first end may be connected to a vehicle by a bolt.

In an embodiment, the wheel assembly may comprise an end cap connected to the second end of the axle, the end cap locking the wheel hub in place around the axle by engaging an inner ring of the first ring bearing. The second end of the axle may comprise a bolt hole, e.g. a threaded bolt hole, and the end cap may be connected to the second end by a bolt.

In an embodiment of the wheel assembly, a diameter of the pulley portion is equal to a diameter of the wheel rim portion. The diameters of the pulley portion and the wheel rim portion are the longest diameters, defined by the outermost points/parts of the respective portion, measured relative to a rotational centre of the axle and/or of the wheel hub.

In an embodiment of the wheel assembly, the wheel hub comprises a first bearing seat, in which an outer ring of the first ring bearing is accommodated, and a second bearing seat in which an outer ring of the second ring bearing is accommodated. The first bearing seat and the second bearing seat are arranged at an inner surface of the wheel hub. The axle comprises a third bearing seat in which an inner ring of the first ring bearing is accommodated, and a fourth bearing seat in which an inner ring of the second ring bearing is accommodated. The third bearing seat and the fourth bearing seat are arranged at an outer circumferential surface of the axle. The diameter of the third bearing seat is smaller than the diameter of the fourth bearing seat and the diameter of the axle decreases in a stepped manner between the fourth bearing seat and the third bearing seat. The stepped decrease in diameters enables the wheel hub comprising the bearing rings mounted in the respective first and second bearing seats to be pushed onto, or removed from, the axle as a whole, i.e. pushed or removed in a single operation.

The inner surface of the wheel hub may comprise a rib separating the first bearing seat and the second bearing seat. Opposite sides of the rib may provide a side portion of each of the first bearing seat and the second bearing seat.

In an embodiment of the wheel assembly, the wheel hub may be manufactured by being lathed from a single piece of metal or by casting.

In an embodiment of the wheel assembly, the axle may be a single component manufactured by being lathed from a single piece of metal or by casting.

In a second aspect, the present invention provides a container handling vehicle comprising at least one set of wheels for moving upon a rail system, the set of wheels comprising a plurality of wheel assemblies according to any embodiment of the first aspect.

In an embodiment, the container handling vehicle may comprise a first and second set of wheels which enable movement of the container handling vehicle in the two perpendicular directions on a rail system forming a grid. The first set of wheels may be arranged to engage with a first set of parallel rails of the rail system, and the second set of wheels may be arranged to engage with a second set of parallel rails of the rail system. At least one of the sets of wheels may be lifted and lowered relative to the other set of wheels, so that the first set of wheels and/or the second set of wheels may be engaged with the respective set of rails at any one time.

In an embodiment, the container handling vehicle may comprise a vehicle body and a vertically moveable lifting frame for lifting a storage container.

In a third aspect, the present invention provides a storage system for storage containers, the storage system comprising a container handling vehicle according to the second aspect.

In an embodiment, the storage system may comprise a framework structure having a rail system upon which the container handling vehicle is arranged to operate, wherein the framework structures defines a plurality of storage columns in which storage containers are arranged one on top of another in vertical stacks.

In an embodiment of the storage system, the container handling vehicle may comprise a vertically moveable lifting frame for lifting a storage container from the storage columns.

In an embodiment of the storage system, the framework structure may comprise a rail system upon which the container handling vehicle may move in two perpendicular directions above the storage columns.

In an embodiment, the storage system may comprise a rail system on which the container handling vehicle may move in the two perpendicular directions, the rail system being arranged above the storage columns.

The rail system may be arranged on top of, and supported by, vertical column profiles defining the storage columns. The rail system may comprise a first set of parallel rails arranged to guide movement of the container handling vehicle in a first direction across the top of the framework structure, and a second set of parallel rails arranged perpendicular to the first set of rails to guide movement of the container handling vehicle in a second direction being perpendicular to the first direction.

In an embodiment of the storage system, the lifting frame may be configured to releasably connect to an upper portion of a storage container. The lifting frame may comprise grippers configured to releasably connect to connector recesses arranged in an upper rim of the storage container.

### BRIEF DESCRIPTION OF THE DRAWINGS

Embodiments of the invention is described in detail by reference to the following drawings:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3 is a perspective view of a prior art container handling vehicle having a cantilevered section for carrying storage containers underneath.
Fig. 4 is a perspective view of a prior art container handling vehicle, wherein a container lifting assembly is shown.
Fig. 5 is a perspective view of a storage container as used in the storage system in fig. 1.
Figs. 6a and 6b show a prior art wheel assembly.
Fig. 7 is a cross-sectional side view of an exemplary wheel assembly according to the invention.
Fig. 8 is a cross-sectional perspective view of the wheel assembly in fig. 7.
Fig. 9 is an exploded side view of the wheel assembly in fig. 7.
Fig. 10 is an exploded perspective view of the wheel assembly in fig. 7.
Fig. 11 is a perspective view of a wheel hub of the wheel assembly in fig. 7 featuring a circumferential surface having a pulley portion and a wheel rim portion.
Fig. 12 is a cross-sectional perspective view of the wheel hub in fig. 11.
Fig. 13 is a perspective view of the wheel hub of the wheel assembly in fig. 7 having a moulded two-component tyre.
Fig. 14 is a perspective view of the wheel hub of the wheel assembly in fig. 7 having a moulded single component tyre.

### DETAILED DESCRIPTION OF THE INVENTION

In overview, a wheel assembly for a container handling vehicle includes a unitary wheel hub having a wheel rim portion and a pulley portion. Providing the hub as a unitary, integral or single component allows precise manufacturing and operation and reduced service requirements, hence providing an improved wheel assembly for container handling vehicles operated on a rail grid of a storage system.

In the following, embodiments of the invention will be discussed in more detail with reference to the appended drawings. The drawings are not intended to limit the invention to the illustrated subject-matter.

As discussed above, a prior art wheel assembly is illustrated in figs. 6a and 6b. The wheel assembly comprises a plurality of separate elements, i.e. a wheel rim element 114, a tyre 115 moulded onto the wheel rim of the wheel rim element 114, an axle assembly 118a,118b and a pulley 116 for a drive belt 117. In the prior art wheel assembly, the axle assembly comprises an inner axle element 118b and an outer axle element 118a being centred and connected to each other by a centre pin 121. The wheel rim element 114 is connected to the pulley 116 by a plurality of bolts 122.

A first ring bearing 123a is arranged between the wheel rim element 114 and the outer axle element 118a, and a second ring bearing 123b is arranged between the pulley 116 and the inner axle element 118a. An inner ring 124 of the second ring bearing 123b is fixed between the inner axle element 118a and the outer axle element 118b.

When used by a container handling vehicle 201,301,401 in a prior art storage system as described in the background section, the rotational movement of the tyre 115 must be very precise to provide the required control of movement upon the rail grid 108. To obtain a precise rotational movement, a high degree of co-axiality of the separate elements of the wheel assembly with respect to the rotational axis of the tyre 115 is needed. Thus, each separate element of the wheel assembly needs to be manufactured and assembled with a high degree of precision. The large number of interconnections between the separate elements of the prior art wheel assembly entail that the required precision of the rotational movement is quite challenging to obtain. Further, the wheel assembly may require frequent service since slack or play in any of the interconnections will affect the precision of the rotational movement. The relatively large number of separate elements is further not optimal when the wheel assembly requires service, e.g. when the pulley 116 and or the second ring bearing 123b needs replacing.

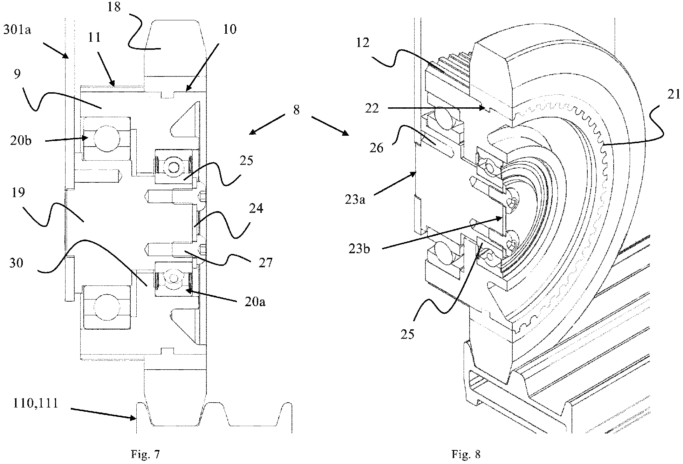

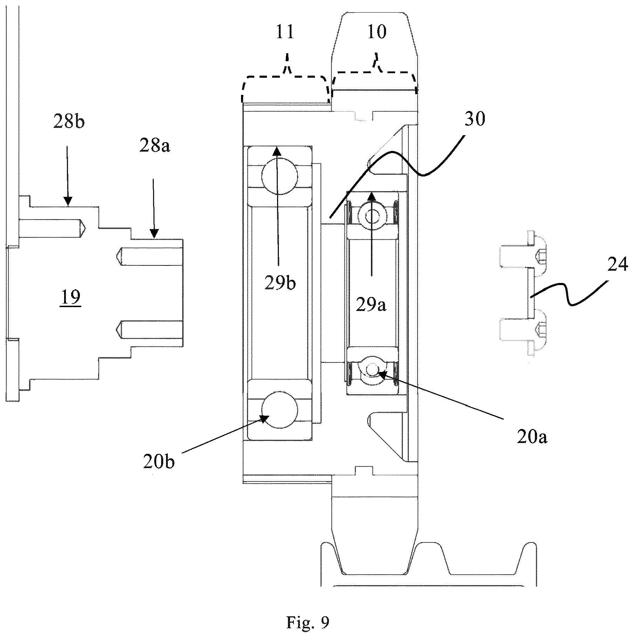

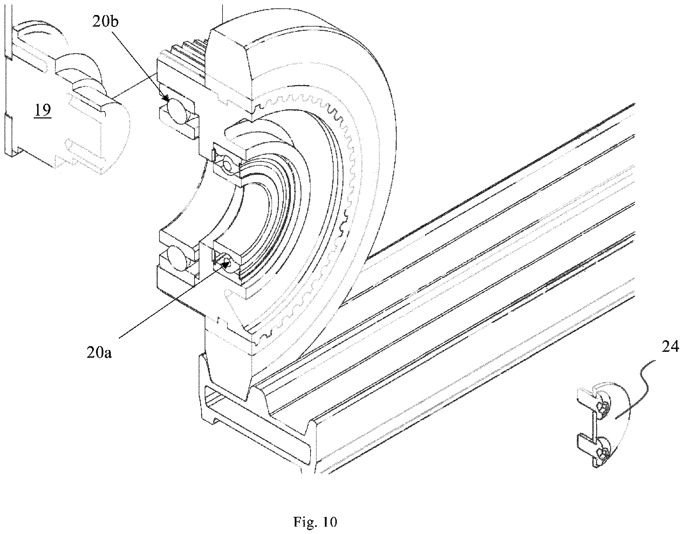

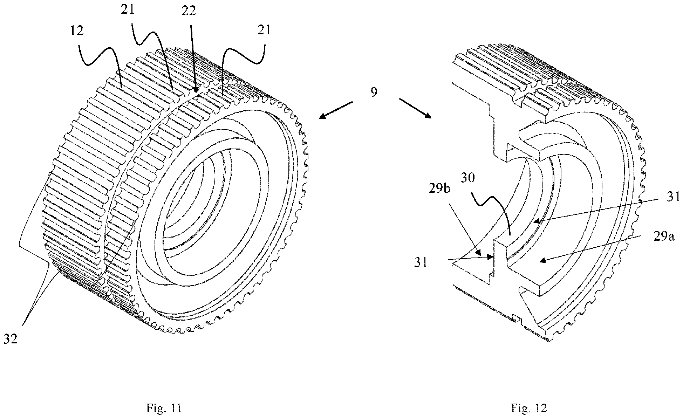

A wheel assembly 8 according to the present invention is illustrated in figs. 7-14.

The wheel assembly 8 comprises a wheel hub 9, a tyre 18 and an axle 19 around which the wheel hub 9 is rotatably mounted. The wheel hub 9 features a circumferential surface 32 which provides a wheel rim portion 10 and a pulley portion 11. The pulley portion 11 comprises teeth 12 for engaging a drive belt 17, and the tyre 18 is moulded onto the wheel rim portion 10.

A first ring bearing 20a and a second ring bearing 20b are arranged between the wheel hub 9 and the axle 19. The first ring bearing 20a is arranged radially inwards of the wheel rim portion 10, and the second ring bearing 20b is arranged radially inwards of the pulley portion 11.

The circumferential surface 32 of the wheel hub 9 extends in an axial direction of the wheel hub beyond an axial extent of each of the first and second ring bearings 20a,20b

In figs. 7 to 14, each of the wheel hub 9 and the axle 19 is manufactured as a single unitary component. However, it is possible for either the wheel hub 9 or the axle 19 to be manufactured as a non-unitary component. Having each of the wheel hub 9 and/or the axle 19, preferably both, manufactured as a single component simplifies the production of the wheel assembly 8 and ensures an optimal co-axiality of the wheel hub 9 and the axle 19 with respect to the rotational axis of the tyre 18. The optimal co-axiality is a result of having fewer component interfaces providing a shorter tolerance stack-up which in turn leads to a more robust wheel assembly. The reduced number of components in the wheel assembly is also advantageous in that it lowers the part cost, the logistic and handling cost and assembly cost (time and equipment), as well as reducing sources of error.

The axle 19 comprises a first end 23a and a second end 23b. The first end is configured to connect the axle 19 to a container handling vehicle 201,301,401 via bolt holes 26. The wheel hub 9 is secured to the axle by an end cap 24 connected to the second end 23b of the axle 19 by bolts 27. The end cap 24 locks the wheel hub in place around the axle by engaging an inner ring 25 of the first ring bearing 20a.

The wheel hub 9 comprises a first bearing seat 29a in which an outer ring of the first ring bearing 20a is accommodated, and a second bearing seat 29b in which an outer ring of the second ring bearing 20b is accommodated. The first bearing seat 29a and the second bearing seat 29b arranged at an inner surface of the wheel hub 9. The inner surface comprises a rib 30 separating the first bearing seat 29a and the second bearing seat 29b. Opposite sides 31 of the rib provides a side portion of each of the first bearing seat 29a and the second bearing seat 29b. The rib 30 facilitates assembly of the wheel assembly in that the ring bearings 20a,20b may be securely accommodated in the wheel hub 9 prior to mounting onto the axle 19.

The axle 19 comprises a third bearing seat 28a in which an inner ring of the first ring bearing 20a is accommodated, and a fourth bearing seat 28b in which an inner ring of the second ring bearing 20b is accommodated. The diameter of the axle 19 and the third and fourth bearing seats 28a,28b are decreased in a stepped manner from the first end 23a to the second end 23b such that the wheel hub 9, having the bearing rings 20a,20b mounted in the respective first and second bearing seat 29a,29b, may be pushed onto the axle 9. This configuration allows for a simple service procedure when e.g. the second ring bearing needs replacement. Further, tightening of the wheel assembly, e.g. due to slack or play in the wheel assembly, may be obtained by simply tightening the bolts 27 connecting the end cap 24.

The wheel rim portion 10 comprises a plurality of teeth 21 over which the tyre 18 is moulded. The teeth 21 extend parallel to a rotational axis of the tyre 18 and prevent radial movement of the tyre 18 relative to the wheel rim portion. In this manner any deformation of the tyre 18 caused by radial slip between the wheel rim 10 portion and the tyre 18 is prevented. In the illustrated wheel assembly, the teeth 21 of the wheel rim portion 10 are extensions of the teeth 12 of the pulley portion 11. The latter feature may simplify the manufacture of the wheel assembly when the wheel hub is lathed from a profile having preformed teeth along its circumference. In other embodiments, the wheel rim portion may have any suitable type of teeth or ribs provided they are arranged in a direction preventing radial movement of the tyre 18 relative to the wheel rim portion.

The wheel rim portion 10 comprises a radially extending recess 22 along its circumference. The recess prevents lateral movement of the tyre 18 relative to the wheel rim portion 10.

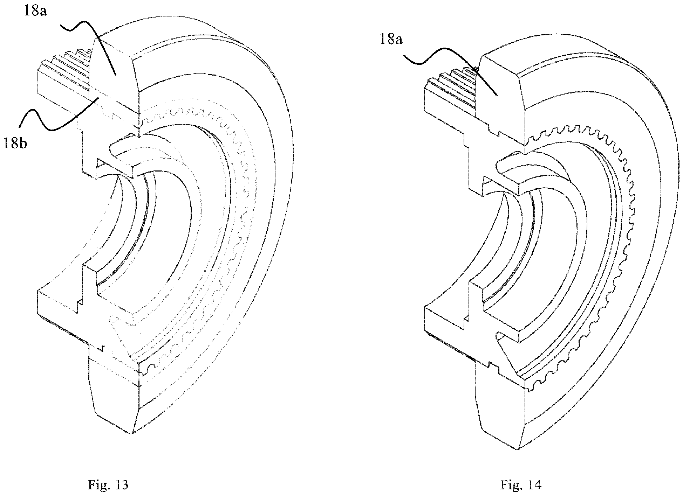

The tyre may comprise a single tyre component 18a, see fig. 13, or a combination of a first tyre component 18b closest to the wheel rim portion 10 and a second tyre component 18a on top of (i.e., radially outwards of) the first tyre component 18b. In the latter case, the first tyre component may be selected for improved adhesion to the wheel rim portion 10.

In other aspects an axle for a wheel assembly comprises a unitary component having a first bearing surface for a pulley bearing seat and a second bearing surface, of smaller diameter, for a wheel bearing seat.

Examples of the present disclosure are set out in the following numbered clauses.
1. A wheel assembly (8) for a container handling vehicle (201,301,401), the wheel assembly comprising
   - a wheel hub (9), wherein a circumferential surface of the wheel hub provides a wheel rim portion (10) and a pulley portion (11), wherein the pulley portion comprises teeth (12) for engaging a drive belt (17);
   - a tyre (18) being moulded onto the wheel rim portion (10);
   - an axle (19) around which the wheel hub (9) is rotatably mounted; and
   - a first ring bearing (20a) and a second ring bearing (20b) arranged between the wheel hub (9) and the axle (19).
2. A wheel assembly according to clause 1, wherein the wheel hub (9) is a single component.
3. A wheel assembly according to clause 1, wherein the axle (19) is a single component.
4. A wheel assembly according to any of the preceding clauses, wherein
   - the first ring bearing (20a) is arranged radially inwards of the wheel rim portion; and
   - the second ring bearing (20b) is arranged radially inwards of the pulley portion.
5. A wheel assembly according to any of the preceding clauses, wherein the wheel rim portion (10) comprises at least one tooth (21) over which the tyre is moulded, the tooth extending parallel to a rotational axis of the tyre.
6. A wheel assembly according to clause 5, wherein the tooth (21) of the wheel rim portion is an extension of one of the teeth (12) of the pulley portion.
7. A wheel assembly according to any of the preceding clauses, wherein the wheel rim portion (10) comprises a radially extending recess (22) over which the tyre is moulded.
8. A wheel assembly according to any of the preceding clauses, wherein the axle (19) comprises a first end (23a) and a second end (23b), the first end being configured to connect the axle to a container handling vehicle.
9. A wheel assembly according to clause 8, wherein the wheel hub (9) comprises a first bearing seat (29a), in which an outer ring of the first ring bearing (20a) is accommodated, and a second bearing seat (29b) in which an outer ring of the second ring bearing (20b) is accommodated, and the axle (19) comprises a third bearing seat (28a) in which an inner ring of the first ring bearing (20a) is accommodated, and a fourth bearing seat (28b) in which an inner ring of the second ring bearing (20b) is accommodated, wherein the diameter of the third bearing seat (28a) is smaller than the diameter of the fourth bearing seat (28b) and wherein the diameter of the axle (19) decreases in a stepped manner between the fourth bearing seat (28b) and the third bearing seat (28a).
10. A wheel assembly according to clause 8 or 9, comprising an end cap (24) connected to the second end (23b) of the axle, the end cap locking the wheel hub in place around the axle by engaging an inner ring (25) of the first ring bearing (20a).
11. A wheel assembly according to any of the preceding clauses, wherein a diameter of the pulley portion is equal to a diameter of the wheel rim portion.
12. A container handling vehicle comprising at least one set of wheels for moving upon a rail system (108), the set of wheels comprising a plurality of wheel assemblies (8) according to any of clauses 1-11.
13. A storage system for storage containers, the storage system comprising a container handling vehicle according to clause 12.

### LIST OF REFERENCE NUMBERS

- 1: Prior art automated storage and retrieval system
- 2: Lifting frame, first type of lifting frame
- 3: Container connector, grippers
- 4: Guiding pin
- 5: Lifting bands
- 6: Vehicle body
- 7: Guiding pin recess
- 8: Wheel assembly
- 9: Wheel hub
- 10: Wheel rim portion
- 11: Pulley portion
- 12: Teeth
- 13: Connector recess
- 14: Sidewall of storage container
- 15: Lower bottom surface of lifting frame
- 16: Upper rim of storage container
- 17: Drive belt
- 18: Tyre
- 19: Axel
- 20a,20b: Ring bearing
- 21: Teeth/ribs
- 22: Recess
- 23a: First end
- 23b: Second end
- 24: End cap
- 25: Inner ring of ring bearing
- 26: Bolt hole
- 27: Bolt
- 28a,28b: Bearing seat (of axel)
- 29a,29b: Bearing seat (of wheel hub)
- 30: Rib/spine (at the inner surface of the wheel hub)
- 31: Sidewall of the rib
- 32: Circumferential surface, i.e. outer surface of the wheel hub
- 100,100': First framework structure, second framework structure
- 102: Upright members of framework structure
- 103: Horizontal members of framework structure
- 104: Storage grid
- 105: Storage column
- 106: Storage container
- 106': Particular position of storage container
- 107: Stack
- 108: Rail system
- 110: Parallel rails in first direction (X)
- 110a: First rail in first direction (X)
- 110b: Second rail in first direction (X)
- 111: Parallel rail in second direction (Y)
- 111a: First rail of second direction (Y)
- 111b: Second rail of second direction (Y)
- 112: Access opening, storage column
- 113: Access opening, buffer column
- 114: Wheel rim
- 115: Tyre
- 116: Pulley
- 117: Drive band
- 118a,b: Wheel hub
- 119: First port column
- 120: Second port column
- 121: Centre pin
- 201: Prior art container handling vehicle
- 201a: Vehicle body of the container handling vehicle 201
- 201b: Drive means / wheel arrangement, first direction (X)
- 201c: Drive means / wheel arrangement, second direction (Y)
- 301: Prior art cantilever container handling vehicle
- 301a: Vehicle body of the container handling vehicle 301
- 301b: Drive means in first direction (X)
- 301c: Drive means in second direction (Y)
- 401: Prior art container handling vehicle
- 401a: Vehicle body of the container handling vehicle 401
- 401b: Drive means in first direction (X)
- 401c: Drive means in second direction (Y)
- Y: Second direction
- Z: Third direction

## Claims

1. A wheel assembly (8) for a container handling vehicle (201,301,401), the wheel assembly comprising a unitary wheel hub (9), wherein a circumferential surface of the wheel hub includes a wheel rim portion (10) and a pulley portion (11).

2. The wheel assembly of claim 1 wherein the pulley portion comprises teeth (12) for engaging a drive belt (17), optionally including a tyre (18) being moulded onto the wheel rim portion (10), the tyre optionally comprising a radially inner portion and a radially outer portion; optionally including an axle (19) around which the wheel hub (9) is rotatably mounted; and optionally including a first ring bearing (20a) and a second ring bearing (20b) arranged between the wheel hub (9) and the axle (19).

3. A wheel assembly according to claim 1 or 2, wherein the wheel hub (9) is a single component, and wherein the axle (19) is a single component.

4. A wheel assembly according to claim 2 or 3, wherein
- the first ring bearing (20a) is arranged radially inwards of the wheel rim portion; and
- the second ring bearing (20b) is arranged radially inwards of the pulley portion, and optionally wherein a rib extends radially inwardly between the first and second ring bearing seats.

5. A wheel assembly according to any of the preceding claims, wherein the wheel rim portion (10) comprises at least one tooth (21) over which a tyre is mouldable, the tooth extending parallel to a rotational axis of the tyre.

6. A wheel assembly according to claim 5, wherein the tooth (21) of the wheel rim portion is an extension of one of the teeth (12) of the pulley portion.

7. A wheel assembly according to any of the preceding claims, wherein the wheel rim portion (10) comprises a radially extending recess (22) over which a tyre is mouldable.

8. A wheel assembly according to any of the preceding claims, wherein the axle (19) comprises a first end (23a) and a second end (23b), the first end being configured to connect the axle to a container handling vehicle.

9. A wheel assembly according to claim 8, wherein the wheel hub (9) comprises a first bearing seat (29a), in which an outer ring of the first ring bearing (20a) is accommodated, and a second bearing seat (29b) in which an outer ring of the second ring bearing (20b) is accommodated, and the axle (19) comprises a third bearing seat (28a) in which an inner ring of the first ring bearing (20a) is accommodated, and a fourth bearing seat (28b) in which an Inner ring of the second ring bearing (20b) is accommodated, wherein the diameter of the third bearing seat (28a) is smaller than the diameter of the fourth bearing seat (28b) and wherein the diameter of the axle (19) decreases in a stepped manner between the fourth bearing seat (28b) and the third bearing seat (28a).

10. A wheel assembly according to claim 8 or 9, comprising an end cap (24) connected to the second end (23b) of the axle, the end cap locking the wheel hub in place around the axle by engaging an inner ring (25) of the first ring bearing (20a).

11. A wheel assembly according to any of the preceding claims, wherein a diameter of the pulley portion is equal to a diameter of the wheel rim portion.

12. A container handling vehicle comprising at least one set of wheels for moving upon a rail system (108), the set of wheels comprising a plurality of wheel assemblies (8) according to any of claims 1-11.

13. A storage system for storage containers, the storage system comprising a container handling vehicle according to claim 12.
